# EUROPEAN PATENT SPECIFICATION

(11) **EP 0 924 446 B1**
(45) Date of publication and mention of the grant of the patent: **19.03.2003**
(21) Application number: 98309995.3
(22) Date of filing: 07.12.1998
(51) Int. Cl.: F16F 9/46, F16F 9/56

(54) **Lockable fluid spring**
Feststellbare Flüssigkeitsfeder
Ressort à fluide verrouillable

(30) Priority: 22.12.1997 GB 9727121
(43) Date of publication of application: 23.06.1999
(73) Proprietor: TRELLEBORG AB, 231 22 Trelleborg (SE)
(72) Inventor: Bouquard, Claude, 70140 Montagney (FR); Ecarnot, Eric, 25770 Serres les Sapins (FR)
(74) Representative: Foster, David Martyn

(56) References cited:
- EP-A- 0 300 204
- EP-A- 0 322 608
- EP-A- 0 668 175
- GB-A- 1 314 936
- GB-A- 2 284 036

## Description

The invention relates to a lockable fluid spring, comprising a hollow body containing sealingly slidable piston means dividing the interior of the hollow body into first and second chamber means containing liquid, a piston rod carried by the piston means and extending through the first chamber means and then sealingly outside of the hollow body, means defining a passageway extending through the piston means for passing liquid between the first and second chamber means, controllable valve means in the passageway and movable from externally of the hollow body between a closed position in which it blocks the passageway so that transfer of liquid between the first and second chamber means is prevented and the piston rod is locked against movement and an open position in which it does not block the passageway whereby transfer of liquid between the first and second chamber means through the passageway allows adjustment of the position of the piston means and the piston rod, compensation means within the hollow body for accommodating changes in the total volume of the first and second chamber means resulting from the varying length of the piston rod in the first chamber means, and normally open valve means which is adapted to be moved into a closed position in the event of a violent mechanical shock applied longitudinally of the hollow body when the controllable valve means is in the open position, thereby to lock the piston means and the piston rod against movement.

Such a fluid spring is known from GB-A-1 314 936. In this known spring, however, the normally-open valve means is positioned in an intermediate wall across the hollow body of the spring which separates the piston means and the two chamber means from a third liquid-filled chamber means defined by a secondary piston forming part of the compensation means. When the violent mechanical shock occurs, the pressure rises in the second chamber means to close the normally-open valve means whereby to lock the main piston. However, at this time, the passageway through the main piston means is still open so that liquid can still transfer to the first chamber means thereby to a certain extent offsetting the pressure rise in the second chamber means. The invention aims to provide a more rapid pressure rise and thus a more rapid locking of the main piston means in the event of the violent shock. In the known arrangement, also, the open passageway through the main piston means causes the pressure rise in the second chamber means, in response to the violent shock, to create a pressure rise in the first chamber means which partially offsets the pressure rise in the second chamber means. The resultant pressure rise in the second chamber means is therefore applied not over the total area of the main piston means but only over an area corresponding to the area of the piston rod. A very high pressure can therefore occur in the second chamber means. The invention aims also to deal with this problem.

According to the invention, therefore, the known spring as first set forth above is characterised in that the normally-open valve means is positioned in the passageway and carried by the piston means whereby to prevent liquid transfer through the passageway when moved into the closed position.

Lockable liquid-gas springs embodying the invention will now be described, by way of example only, with reference to the accompanying diagrammatic drawings in which:
Figure 1 is a longitudinal section through one of the springs in a locked condition;
Figure 2 is an enlarged longitudinal section of part of the spring of Figure 1 showing it in an unlocked condition with a piston rod undergoing controlled movement in the "outward" direction;
Figure 3 corresponds to Figure 2 but shows the condition when the piston rod is undergoing controlled movement in the "return" direction;
Figure 4 is an enlarged view longitudinal section of part of the spring of Figure 1 but showing a condition in which the spring becomes locked as a result of an abrupt mechanical shock during outward movement of the piston rod;
Figure 5 is an enlarged longitudinal section of part of the spring of Figure 1 showing an initial phase in the process of locking the spring when it is subjected to an abrupt mechanical shock during return movement of the piston rod; and
Figure 6 corresponds to Figure 5 but shows the second and final phase of the locking process.

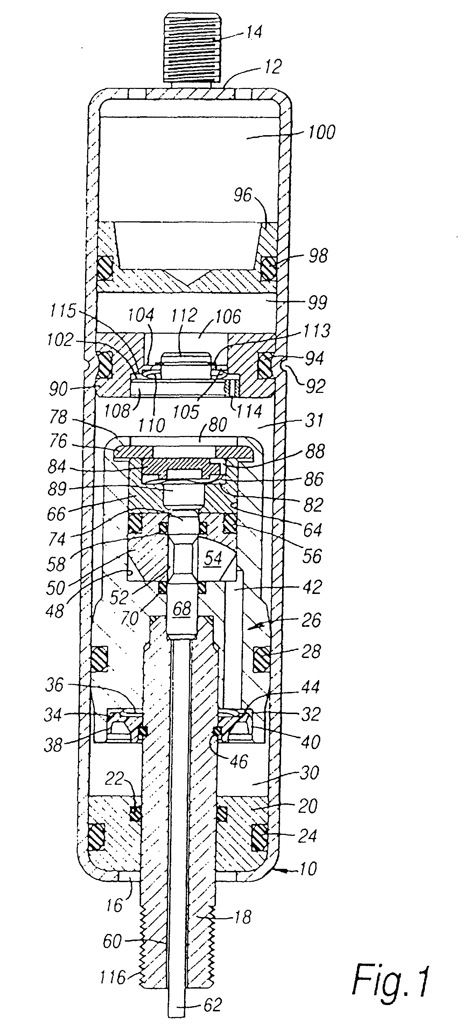

Referring to Figure 1, the spring comprises a cylindrical body 10 having a sealed end 12 carrying a fixture 14. At its opposite end, the body 10 has an opening 16 through which extends a piston rod 18. The piston rod 18 slides through a guide 20. The guide has an O-ring 22 to provide a seal with the outer surface of the piston rod 18 and a second O-ring 24 providing a seal with the cylindrical body 10.

The piston rod 18 is rigid with a piston assembly 26 which carries an O-ring 28 to seal with the body 10. A chamber 30 is thus defined between the piston assembly 26 and the sealing guide 20. A chamber 31 is defined at the opposite end of the piston assembly 26. Chambers 30 and 31 are filled with liquid.

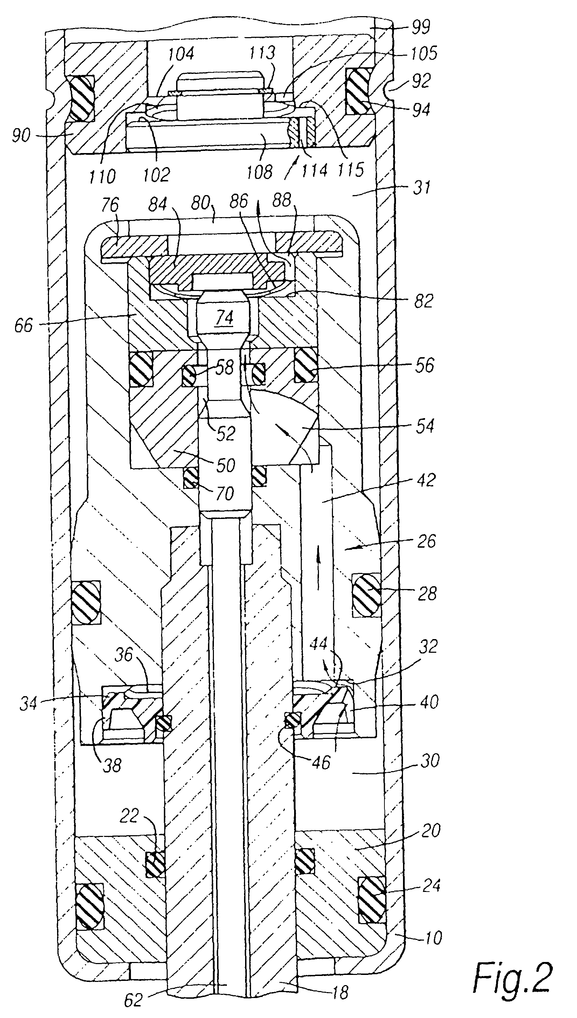

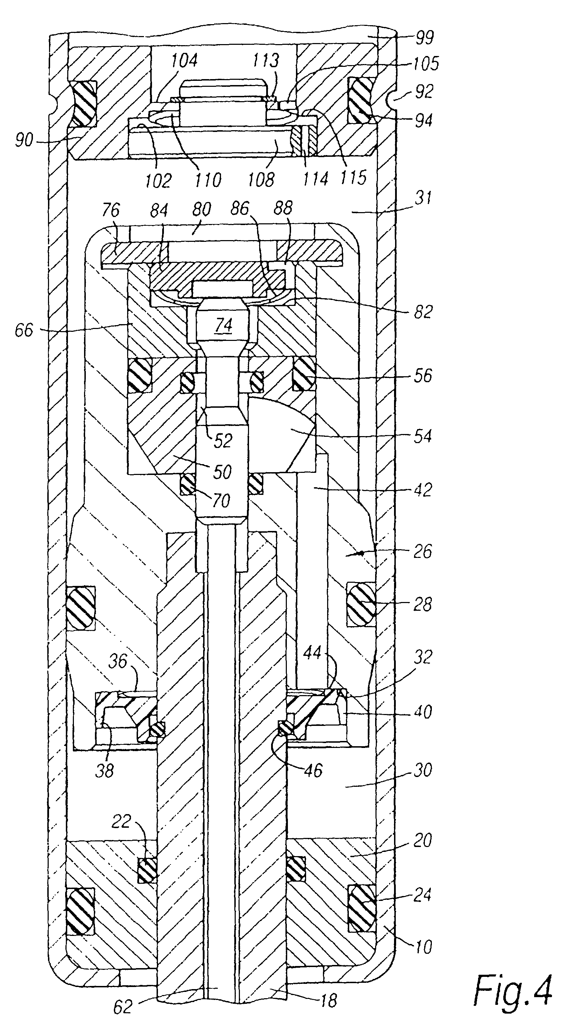

At its end facing the chamber 30, the piston assembly 26 has a recess 32 which is best shown in Figures 2 - 6. This recess contains a circular valve member 34 which is axially movable within the recess 32, being urged to the open end of the recess 32 by a disc spring 36 as shown in Figure 2. The valve member 34 has a flexible peripheral lip 38 sliding in contact with the periphery of the recess 32. As will be more specifically explained with reference to Figure 2, the peripheral lip 38 has a slit or opening 40 which, when the valve member 34 is outwardly urged by the spring 36 into an open position, permits liquid to flow past the valve member 34 and into an eccentrically positioned but axially directed bore 42. Under certain conditions, as will be explained in more detail below, the valve member 34 becomes moved into a closed position. against the action of the spring 36, as shown in Figure 4. In this position, the surface 44 of the valve member 34 is forced into sealing contact with the base of the recess 32, and liquid can no longer flow from chamber 30 into the bore 42.

An O-ring 46 provides a seal between the outside surface of the piston rod 18 and the surrounding surface of the valve member 34.

The bore 42 in the piston assembly 26 leads to a deep cylindrical recess 48 at the end of the piston assembly 26 adjacent the chamber 31. The recess 48 contains a block 50 having an axially positioned and axially directed bore 52 which is in communication with an offset chamber 54 which is in turn in communication with the bore 42. The block 50 is sealed to the axially directed wall of the recess 48 by a O-ring 56. A radially directed recess in the block 50 holds a O-ring 58 surrounding the axial bore 52.

The piston rod 18 has an axial bore 60 containing an axially movable control rod 62. The control rod 62 extends into and through the bore 52 in the block 50 and towards a recess 64 in a further block 66. The control rod 62 has a region 68 of enlarged diameter substantially matching the diameter of the bore 52 and which sealingly slides through a O-ring 70 located in a recess in the piston assembly 26. The control rod 62 terminates in an enlarged head 74.

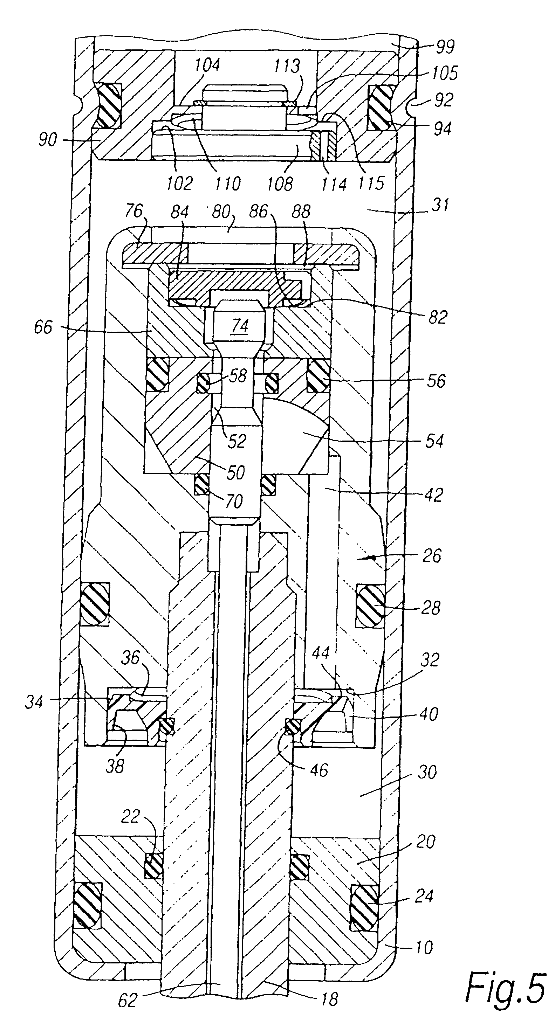

Block 66 is held in position by a ring 76 held under a lip 78 defining an opening 80 at the inner end of the piston assembly 26. The block 66 defines a recess 82 in which is located a valve member 84 urged axially towards the ring 76 by a disc spring 86, as shown in Figure 2. In this position, there is communication between the bore 64 and the chamber 31 through a passage 88 around the periphery of the valve member 84 and thence through opening 80. As will be explained in more detail with reference to Figure 5, under certain conditions the valve member 84 moves against the action of the spring 86 and seals against the base of the recess 82 so as to block communication between the bore 66 and the chamber 31. Recess 82 communicates with a bore 89 connecting with the bore 52.

Chamber 31 is also defined by a separator 90 which is axially locked to the cylindrical body 10 by means of a circular shoulder 92 and sealed thereto by a circular seal 94.

Between the fixed separator 90 and the end 12 of the body 10 is located an axially slidable separator 96 carrying a O-ring 98. A chamber 99 is thus defined between the fixed separator 90 and the slidable separator 96. Chamber 99 is filled with liquid. Slidable separator 96 defines a chamber 100 which is filled with gas under pressure.

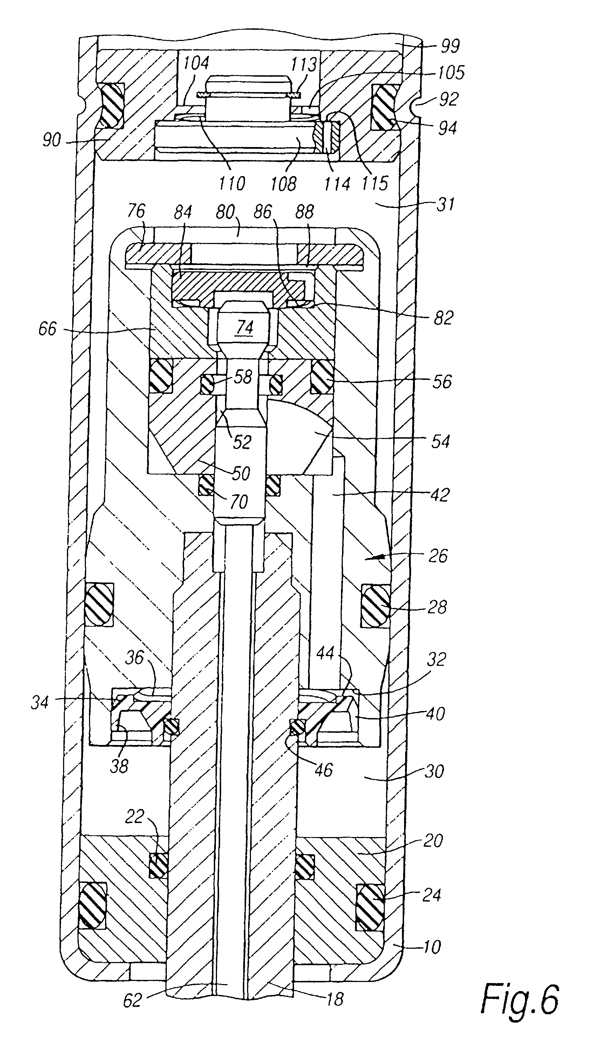

The fixed separator 90 has a recess 102 communicating with the chamber 31. This recess has a base 104 which is apertured at 105 to communicate with a recess 106 open to chamber 99. A movable valve member 108 is slidable in the recess 102 and urged outwardly of the recess by a disc spring 110. The valve member 108 has a portion 112 of reduced diameter which extends through the aperture in the base 104 and carries a ring 113 which is urged into contact with the base 104 by the spring 110. In this position of the valve member 108, chambers 31 and 99 are connected via a passageway 114 in the valve member 108 and the opening 105 in the base 104 of the recess 102. Under certain conditions, as will be described in more detail below with particular reference to Figure 6, the valve member 108 is urged inwardly of the recess 102 against the force of the spring 110, and the open end of passageway 114 moves into abutment with a shoulder 115 in the recess 102 to block communication between chambers 31 and 99.

In use, the liquid-gas spring controls the movement of a member which is hingedly or slidably mounted (for example) with reference to a fixed part. In one particular example, which will be described in more detail, it is assumed that the spring is being used to control the angle of inclination of the back rest of a seat in a vehicle. Thus, the spring extends between the hinged backrest and the vehicle body (or the base of the seat connected to the vehicle body). Thus, the fixture 14 (Figure 1) would be connected to the vehicle body or the seat base and the protruding end of the piston rod 18 would be connected to the seat back, such as by means of a screw thread 116. The user can adjust the angle of inclination of the seat back by means of the control rod 62 in a manner to be explained.

In the closed position of the control rod 62, as illustrated in Figure 1, the enlarged head 74 of the control rod seals against the O-ring 58. Therefore, although valve 34 is urged into its open position by spring 36 (see Figure 2 for example), and valve 84 is urged into its open position by spring 86 (see also Figure 2), communication between chambers 30 and 31 via these open valves is blocked by the position of the head 74 of the control rod. Liquid cannot transfer between chambers 30 and 31; piston assembly 26 is thus locked against movement and correspondingly locks the piston rod 18 and the back rest of the seat.

If the user wishes to adjust the position of the seat back, the user operates the control rod 62 so as to move it into the position shown in Figures 2 - 6 where the enlarged head 74 is moved clear of the O-ring 58 and into the enlarged bore 89. At this time, valves 34 and 84 will be open together with valve 108. Therefore, if the user hinges the back rest in such direction as to move the piston rod 18 in the outward direction (that is, outwardly of the cylindrical body 10), such movement will be assisted by the pressure of the gas in chamber 100 which will act on the liquid in chambers 99 and 31 and the required transfer of liquid from chamber 30 to chamber 31 will take place as shown by the arrows in Figure 2. The liquid passes through the slit 40 in the valve member 34, along the bore 42, through the inner chamber 54, along the bore 52 and into the bore 89 around the head 74 of the control rod, and thence into chamber 31 via the passage 88 and the opening 80 in the piston assembly 26.

During this outward movement of the piston rod 18, there will be an increase in the aggregate volume of chambers 30 and 31 because of the outward movement of the piston rod 18. To compensate for this increased volume, separator 96 moves towards the fixed separator 90 under the action of the pressurised gas within chamber 100 (Figure 1), and a compensating amount of liquid transfers through passageway 114 from chamber 100 to chamber 31.

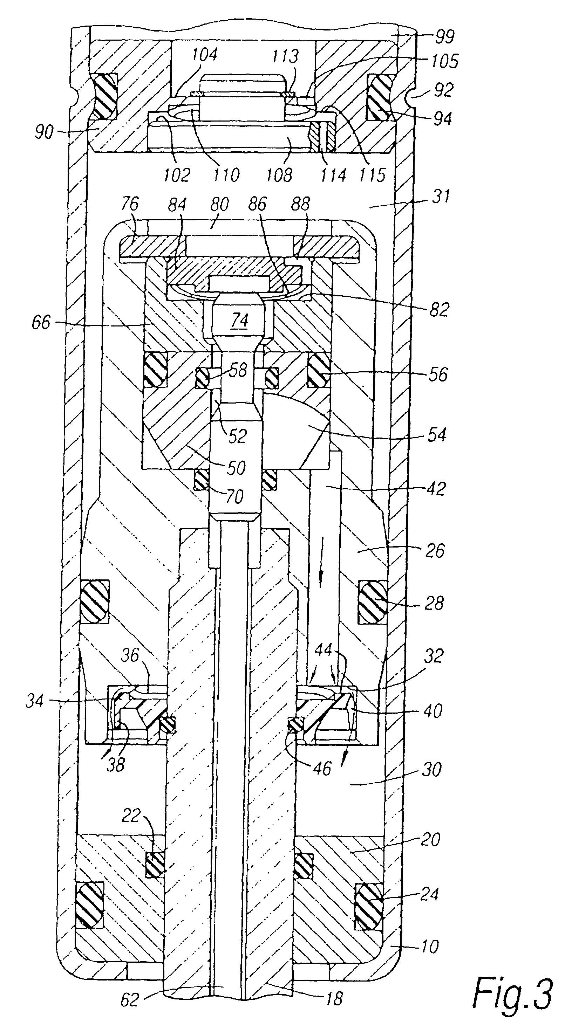

If instead, the user hinges the seat back rest in the opposite direction, so that the piston rod 18 is moved inwardly of the cylindrical body 10, liquid transfers from chamber 31 to chamber 30 as shown by the arrows in Figure 3. As the piston rod moves inwardly of the cylindrical body 10, the total volume of chambers 30 and 31 will decrease because of the presence of a greater part of the piston rod. To compensate for this reduced volume, movable separator 96 (Figure 1) moves towards end 12 of the cylindrical body 10, against the pressure of the gas in chamber 100, allowing a compensating amount of liquid to transfer from chamber 31 to chamber 98 through the open passageway 114.

In this way, the user can adjust the angle of inclination of the back rest by means of the control rod 62.

It is important for safety reasons in a vehicle that the seat back rest should be locked in normal use of the vehicle. This is achieved by movement of the control rod 62 into the closed position shown in Figure 1 in which the enlarged end 74 seals against the sealing ring 58 and blocks transfer of liquid between chambers 30 and 31. However it is also important that the back rest should become locked in the event of such a shock occurring while the user is actually adjusting the hack rest, that is, while the control rod 62 is in the open position with enlarged head 74 clear of the sealing ring 58. The spring being described achieves this aim, as will now be described. The seat back rest is thus also locked against movement in response to a violent or abrupt mechanical shock to the vehicle, such as might be caused in an accident. Such a shock could act either against or with the direction of movement of the vehicle depending on whether the vehicle is struck from in front or behind.

The first condition to be considered will be the condition when the control rod 62 is open and a violent shock occurs which acts on the seat back rest and tends to move the piston rod in the outward direction. Figure 2 shows the direction of liquid transfer between chambers 30 and 31 during normal outward movement of the piston rod 18. In the event of a violent shock, there will be created a very rapid increase of in the rate of liquid flow between these two chambers. However, the opening 40 in the valve 34 (Figure 2) is designed to permit only a rate of flow corresponding to normal adjustment. Therefore, in the event of a violent shock, the required higher rate of flow cannot pass through the opening 40. The pressure rises rapidly in chamber 30, and acts against the force of the spring 36, causing valve 34 to move into the closed position shown in Figure 4, Communication between chambers 30 and 31 is thus blocked, even though the control rod 62 is in the open position. The seat hack rest is locked against movement.

When the violent shock is removed, the pressure within chamber 30 will reduce, allowing valve member 34 to move into the open position. The scat back can now be adjusted in the normal way by the control rod 62.

The second condition to be considered is the condition where the violent shock acts on the back rest so as to tend to move the piston rod IS inwardly of the cylindrical body 10.

The arrows in Figure 3 show the flow of liquid between chambers 31 and 30 during normal inward movement of the piston rod 18. In the event of a violent shock tending to move the piston rod in this direction, however, there will be a very rapid increase in the rate of liquid flow from chamber 31 to chamber 30 through passageway 88. There will also be a corresponding rapid increase of flow of liquid from chamber 31 to chamber 98 through passageway 114. However, passageways 88 and 114 are designed to permit only the normally required rate of flow, during normal adjustment of the seat back rest. Therefore, when the increase in liquid flow through these passageways starts, the pressure within chamber 31 rises rapidly and causes valve members 84 and 108 to move into their closed positions against the respective forces of springs 86 and 110. Passageways 88 and 114 are thus closed. Transfer of liquid from chamber 31 to chamber 30, and from chamber 31 to chamber 98 is thus blocked, and the seat back rest is locked against movement even though the control rod 62 is in the open position.

The valves 84 and 108 will not necessarily move simultaneously into their closed positions. The order in which they so move will depend on the relative strength of the springs 86 and 110 and the relative sizes of the passageways 88 and 114. However, whatever is the order of their closing, they will both become rapidly closed to lock the seat back.

When the rapid shock is removed, the pressure within chamber 31 will reduce, and valve members 84 and 108 will move into their open positions again to enable normal control of seat back movement.

In this way, therefore, the seat back rest (or other adjustable member) is blocked against dangerous movement in the event of a violent decelerative or accelerative shock to the vehicle, even if this shock should occur at the same time as the user is adjusting the back rest (or other adjustable member).

## Claims

1. A lockable fluid spring, comprising a hollow body (10) containing sealingly slidable piston means (26) dividing the interior of the hollow body (10) into first (30) and second (31) chamber means containing liquid, a piston rod (18) carried by the piston means (26) and extending through the first chamber means (30) and then sealingly outside of the hollow body (10), means defining a passageway (40,42,48,52,89,88) extending through the piston means (26) for passing liquid between the first and second chamber means (30,31), controllable valve means (74) in the passageway (40,42,48,52,89,88) and movable from externally of the hollow body (10) between a closed position in which it blocks the passageway (40,42,48,52,89,88) so that transfer of liquid between the first and second chamber means (30,31) is prevented and the piston rod (18) is locked against movement and an open position in which it does not block the passageway (40,42,48,52,89,88) whereby transfer of liquid between the first and second chamber means (30,31) through the passageway (40,42,48,52,89,88) allows adjustment of the position of the piston means (26) and the piston rod (18), compensation means (96) within the hollow body (10) for accommodating changes in the total volume of the first and second chamber means (30,31) resulting from the varying length of the piston rod (18) in the first chamber means (30), and normally open valve means (34,84) which is adapted to be moved into a closed position in the event of a violent mechanical shock applied longitudinally of the hollow body (10) when the controllable valve means (74) is in the open position, thereby to lock the piston means (26) and the piston rod (18) against movement, **characterised in that** the normally-open valve means (34,84) is positioned in the passageway (40,42,48,52,89,88) and carried by the piston means (26) whereby to prevent liquid transfer through the passageway (40,42,48,52,89,88) when moved into the closed position.

2. A spring according to claim 1, **characterised in that** the normally-open valve means (34,84) comprises valve means (34,84) biassed into its open position by spring means (36,86) and movable into the closed position in response to pressure increase in the chamber means (30,31) resulting from the violent mechanical shock.

3. A spring according to claim 1, **characterised in that** the normally-open valve means comprises first normally-open valve means (34) in the passageway (40,42,48,52,89,88) and movable into the closed position in response to a violent mechanical shock in one longitudinal direction and second normally open valve means (84) in the passageway (40,42,48,52,89,88) and movable into the closed position in response to a violent mechanical shock in the opposite longitudinal direction.

4. A spring according to claim 2, **characterised in that** the normally-open valve means comprises a first normally-open valve member (34) in the passageway (40,42,48,52,89,88) which is movable into the closed position in response to a pressure rise in the first chamber means (30) resulting from a violent mechanical shock in one longitudinal direction and a second normally-open valve member (84) in the passageway (40,42,48,52,89,88) which is movable into the closed position in response to a pressure rise in the second chamber means (31) resulting from a violent mechanical shock in the opposite longitudinal direction.

5. A spring according to claim 4, **characterised in that** the first normally open valve member (34) is mounted to be sealingly slidable on the piston rod (18) and to be open to the pressure in the first chamber means (30) and to be biassed along the piston rod (18) in a direction towards the first chamber means (30) by the spring means (36).

6. A spring according to claim 4 or 5, **characterised in that** the second normally-open valve member (84) comprises a disc-shaped valve member (84) axially movable in the piston means (26) and open to pressure in the second chamber means (31), and biassed towards the second chamber means by the spring means (86).

7. A spring according to any preceding claim, **characterised in that** the controllable valve means (74) is movable between its two positions by a control rod (62) extending in longitudinally slidable manner within the piston rod (18) and externally of the hollow body (10).

8. A spring according to claim 7, **characterised in that** the controllable valve means comprises an extension of the control rod (62) within the piston means (26) which carries a valve portion (74) of enlarged diameter which is movable in the passageway (40,42,48,52,89,88), in response to sliding movement of the control rod (62), between a position corresponding to the closed position of the controllable valve means (74) in which it engages sealing means (58) in a relatively narrow region of the passageway (40,42,48,52,89,88) and a position corresponding to the open position of the controllable valve means (74) in which it is located in an enlarged region of the passageway (40,42,48,52,89,88).

9. A spring according to claim 8, **characterised in that** the passageway (40,42,48,52,89,88) includes a bore (42) extending longitudinally of and within the piston means (26) but eccentric to the longitudinal axis thereof and communicating with the relatively narrow region.

10. A spring according to any preceding claim, **characterised in that** the compensation means (96) comprises secondary sealingly slidable piston means (96) separating a chamber (100) filled with gas under pressure from the pressure of the liquid within the second chamber means (31), whereby the position of the secondary piston means (96) within the hollow body (10) varies to accommodate changes in the total volume of the first and second chamber means (30,31) resulting from the varying length of the piston rod (18) in the first chamber means (30).

11. A spring according to claim 10, **characterised in that** the pressure within the second chamber means (31) is communicated to the secondary piston means (96) through further valve means (108) which is normally biassed into an open position but is movable into a closed position to block the said communication in response to pressure rise in the second chamber means (31) resulting from a violent mechanical shock.

12. A spring according to claim 11, **characterised in that** the further valve means (108) is controllably located within an aperture (102,106) in a wall (90) extending fixedly and sealingly across the hollow body (10).

13. A spring according to any preceding claim, **characterised in that** it is adapted to control relative movement of first and second members, in which the distal end of the piston rod (18) carries fixing means (116) for attaching the piston rod (18) to the first member and the opposite end of the hollow body (10) carries fixing means (14) for attaching the hollow body (10) to the second member.

14. A spring according to claim 13, **characterised in that** the first member is a vehicle body or a member rigidly fixed to the vehicle body and the second member is a member movably mounted with respect to the first member.

15. A spring according to claim 14, **characterised in that** the second member is a hingeably inclined back rest of a vehicle seat.

## Patentansprüche

1. Feststellbare Fluidfeder, enthaltend einen Hohlkörper (10), der eine abgedichtet verschiebbare Kolbeneinrichtung (26) enthält, die den Innenraum des Hohlkörpers (10) in erste und zweite Kammereinrichtungen (30,31) unterteilt, die eine Flüssigkeit enthalten, eine Kolbenstange (18), die von der Kolbeneinrichtung (26) getragen ist und sich durch die erste Kammereinrichtung (30) und dann abgedichtet aus dem Hohlkörper (10) heraus erstreckt, eine Einrichtung, die einen Durchgang (40,42,48,52,89,88) bildet, der sich durch die Kolbeneinrichtung (26) erstreckt, um Flüssigkeit zwischen den ersten und zweiten Kammereinrichtungen (30,31) durchzulassen, eine steuerbare Ventileinrichtung (74) in dem Durchgang (40,42,48,52,89,88), die von außerhalb des Hohlkörpers (10) zwischen einer geschlossenen Stellung, in der sie den Durchgang (40,42,48,52,89,88) sperrt, so daß ein Übergang von Flüssigkeit zwischen den ersten und zweiten Kammereinrichtungen (30,31) verhindert ist, und die Kolbenstange (18) gegen Bewegung gesperrt ist, und einer offenen Stellung bewegbar ist, in der sie den Durchgang (40,42,48,52,89,88) nicht sperrt, wodurch ein Übergang von Flüssigkeit zwischen den ersten und zweiten Kammereinrichtungen (30,31) durch den Durchgang (40,42,48,52,89,88) eine Einstellung der Stellung der Kolbeneinrichtung (26) und der Kolbenstange (18) erlaubt, eine Kompensationseinrichtung (96) innerhalb des Hohlkörpers (10) zum Aufnehmen von Änderungen des Gesamtvolumens der ersten und zweiten Kammereinrichtungen (30,31), die aus der veränderlichen Länge der Kolbenstange (18) in der ersten Kammereinrichtung (30) resultiert, und eine normalerweise offene Ventileinrichtung (34,84), die dazu eingerichtet ist, in eine geschlossene Stellung im Falle eines heftigen mechanischen Stoßes bewegt zu werden, der in Längsrichtung des Hohlkörpers (10) einwirkt, wenn die steuerbare Ventileinrichtung (74) sich in der offenen Stellung befindet, um dadurch die Kolbeneinrichtung (26) und die Kolbenstange (18) gegen Bewegung zu sperren, **dadurch gekennzeichnet, daß** die normalerweise offene Ventileinrichtung (34,84) in dem Durchgang (40,42,48,52,89,88) angeordnet und von der Kolbeneinrichtung (26) getragen ist, um dadurch einen Übergang von Flüssigkeit durch den Durchgang (40,42,48,52,89,88) zu verhindern, wenn sie in die geschlossene Stellung bewegt ist.

2. Feder nach Anspruch 1, **dadurch gekennzeichnet, daß** die normalerweise offene Ventileinrichtung (34,84) eine Ventileinrichtung (34,84) enthält, die in ihre offene Stellung durch eine Federeinrichtung (36,86) vorgespannt ist und in die geschlossene Stellung als Folge eines Druckanstiegs in der Kammereinrichtung (30,31), hervorgerufen durch den heftigen mechanischen Stoß, bewegbar ist.

3. Feder nach Anspruch 1, **dadurch gekennzeichnet, daß** die normalerweise offene Ventileinrichtung enthält: eine erste normalerweise offene Ventileinrichtung (34) im Strömungsweg (40,42,48,52,89,88), die in die geschlossene Stellung als Folge eines heftigen mechanischen Stoßes, der in der einen Längsrichtung einwirkt, beweglich ist, und eine zweite normalerweise offene Ventileinrichtung (84) im Strömungsweg (40,42,48,52,89,88), die in die geschlossene Stellung als Folge eines heftigen mechanischen Stoßes in der entgegengesetzten Längsrichtung bewegbar ist.

4. Feder nach Anspruch 2, **dadurch gekennzeichnet, daß** die normalerweise offene Ventileinrichtung ein erstes normalerweise offenes Ventilelement (34) im Strömungsweg (40,42,48,52,89,88), die in die geschlossene Stellung als Folge eines Druckanstiegs in der ersten Kammereinrichtung (30) als Folge eines heftigen mechanischen Stoßes, der in der einen Längsrichtung einwirkt, bewegbar ist, und ein zweites normalerweise offenes Ventilelement (34) im Strömungsweg (40,42,48,52,89,88), das in die geschlossene Stellung infolge eines Druckanstiegs in der zweiten Kammereinrichtung (31) als Folge eines heftigen mechanischen Stoßes in der entgegengesetzten Längsrichtung bewegbar ist.

5. Feder nach Anspruch 4, **dadurch gekennzeichnet, daß** das erste normalerweise offene Ventilelement (34) so montiert ist, daß es abgedichtet auf der Kolbenstange (18) verschiebbar ist und für den Druck in der ersten Kammereinrichtung (30) offen ist, und längs der Kolbenstange (18) in einer Richtung gegen die erste Kammereinrichtung (30) durch die Federeinrichtung (36) vorgespannt ist.

6. Feder nach Anspruch 4 oder 5, **dadurch gekennzeichnet, daß** das zweite normalerweise offene Ventilelement (34) ein tellerförmiges Ventilelement (84) aufweist, das axial in der Kolbeneinrichtung (26) bewegbar und für den Druck in der zweiten Kammereinrichtung (31) offen ist und gegen die zweite Kammereinrichtung durch die Federeinrichtung (86) vorgespannt ist.

7. Feder nach einem der vorhergehenden Ansprüche, **dadurch gekennzeichnet, daß** die steuerbare Ventileinrichtung (74) zwischen ihren zwei Stellungen durch einen Steuerstab (62) bewegbar ist, der sich in einer in Längsrichtung verschiebbaren Weise innerhalb der Kolbenstange (18) und aus dem Hohlkörper (10) heraus erstreckt.

8. Feder nach Anspruch 7, **dadurch gekennzeichnet, daß** die steuerbare Ventileinrichtung eine Verlängerung der Steuerstange (62) innerhalb der Kolbeneinrichtung (26) aufweist, die ein Ventilteil (74) von vergrößertem Durchmesser trägt, das in dem Strömungskanal (40,42,48,52,89,88) in Abhängigkeit von der Gleitbewegung der Steuerstange (62) zwischen einer Stellung, die der geschlossenen Stellung der steuerbaren Ventileinrichtung (34) entspricht, in der sie an einer Dichtungseinrichtung (58) in einem relativ engen Bereich des Strömungsweges (40,42,48,52,89,88) und einer Stellung, die der offenen Stellung der steuerbaren Ventileinrichtung (74) entspricht, in der sie sich in einem vergrößerten Bereich in dem Strömungskanal (40,42,48,52,89,88) befindet, bewegbar ist.

9. Feder nach Anspruch 8, **dadurch gekennzeichnet, daß** der Strömungsweg (40,42,48,52,89,88) eine Bohrung (42) aufweist, die sich in Längsrichtung der Kolbeneinrichtung (26) innerhalb derselben aber exzentrisch zur Längsachse derselben erstreckt und mit dem relativ engen Bereich in Verbindung ist.

10. Feder nach einem der vorhergehenden Ansprüche, **dadurch gekennzeichnet, daß** die Kompensationseinrichtung (96) eine sekundäre, abgedichtet verschiebbare Kolbeneinrichtung (96) aufweist, die eine mit einem Druckgas gefüllte Kammer (100) gegen den Druck der Flüssigkeit in der zweiten Kammereinrichtung (31) trennt, wodurch die Stellung der sekundären Kolbeneinrichtung (96) innerhalb des Hohlkörpers (10) wechselt, um Änderungen im Gesamtvolumen der ersten und zweiten Kammereinrichtungen (30,31), die aus der wechselnden Länge der Kolbenstange (18) in der ersten Kammereinrichtung (30) herrührt, auszugleichen.

11. Feder nach Anspruch 10, **dadurch gekennzeichnet, daß** der Druck in der zweiten Kammereinrichtung (31) auf die sekundäre Kolbeneinrichtung (96) über eine weitere Ventileinrichtung (108) übertragen ist, die normalerweise in eine offene Stellung vorgespannt, aber in eine geschlossene Stellung bewegbar ist, um die Verbindung in Abhängigkeit von einem Druckanstieg in der zweiten Kammereinrichtung (31) zu unterbrechen, der von einem heftigen mechanischen Stoß herrührt.

12. Feder nach Anspruch 11, **dadurch gekennzeichnet, daß** die weitere Ventileinrichtung (108) steuerbar in einer Öffnung (102,106) in einer Wand (90) angeordnet ist, die sich fest uned abgedichtet quer im Hohlkörper (10) erstreckt.

13. Feder nach einem der vorhergehenden Ansprüche, **dadurch gekennzeichnet, daß** sie dazu eingerichtet ist, eine Relativbewegung von ersten und zweiten Elementen zu steuern, wobei das ferne Ende der Kolbenstange (18) Befestigungseinrichtungen (116) zum Anbringen der Kolbenstange (18) an dem ersten Element trägt, und das entgegengesetzte Ende des Hohlkörpers (10) eine Befestigungseinrichtung (14) zum Anbringen des Hohlkörpers (10) an dem zweiten Element trägt.

14. Feder nach Anspruch 13, **dadurch gekennzeichnet, daß** das erste Element ein Fahrzeugkörper oder ein starr mit dem Fahrzeugkörper verbundenes Element ist und das zweite Element ein gegenüber dem ersten Element beweglich montiertes Element ist.

15. Feder nach Anspruch 14, daß das zweite Element eine gelenkig angebrachte, neigbare Rückenlehne eines Fahrzeugsitzes ist.

## Revendications

1. Ressort à fluide verrouillable, comportant un corps creux (10) contenant des moyens de piston pouvant coulisser de manière étanche (26) qui divisent l'intérieur du corps creux (10) en premiers (30) et deuxièmes (31) moyens de chambre contenant du liquide, une tige de piston (18) portée par les moyens de piston (26) et s'étendant à travers les premiers moyens de chambre (30) et ensuite de manière étanche à l'extérieur du corps creux (10), des moyens définissant un passage (40, 42, 48, 52, 89, 88) s'étendant à travers les moyens de piston (26) afin de laisser passer du liquide entre les premiers et deuxièmes moyens de chambre (30, 31), des moyens de soupape pouvant être commandés (74) dans le passage (40, 42, 48, 52, 89, 88) et mobiles depuis l'extérieur du corps creux (10) entre une position fermée dans lesquels ils bloquent le passage (40, 42, 48, 52, 89, 88) de telle sorte que le transfert de liquide entre les premiers et deuxièmes moyens de chambre (30, 31) est empêché et la tige de piston (18) est bloquée à l'encontre d'un déplacement et une position ouverte dans laquelle ils ne bloquent pas le passage (40, 42, 48, 52, 89, 88) de sorte que le transfert de liquide entre les premiers et deuxièmes moyens de chambre (30, 31) à travers le passage (40, 42, 48, 52, 89, 88) permet le réglage de la position des moyens de piston (26) et de la tige de piston (18), des moyens de compensation (96) à l'intérieur du corps creux (10) destinés à accepter des changements dans le volume total des premiers et deuxièmes moyens de chambre (30, 31) qui résultent de la longueur variable de la tige de piston (18) dans les premiers moyens de chambre (30), et des moyens de soupape normalement ouverts (34, 38) qui sont prévus pour être déplacés dans une position fermée dans le cas d'un choc mécanique violent appliqué longitudinalement par rapport au corps creux (10) lorsque les moyens de soupape pouvant être commandés (74) sont dans la position ouverte, afin de bloquer ainsi les moyens de piston (26) et la tige de piston (18) à l'encontre d'un mouvement, **caractérisé en ce que** les moyens de soupape normalement ouverts (34, 84) sont positionnés dans le passage (40, 42, 48, 52, 89, 88) et portés par les moyens de piston (26) de façon à empêcher un transfert de liquide à travers le passage (40, 42, 48, 52, 89, 88) lorsqu'ils sont déplacés dans la position fermée.

2. Ressort selon la revendication 1, **caractérisé en ce que** les moyens de soupape normalement ouverts (34, 84) comportent des moyens de soupape (34, 84) rappelés dans leur position ouverte par des moyens de ressort (36, 86) et mobiles dans la position fermée en réponse à une augmentation de pression dans les moyens de chambre (30, 31) qui résulte du choc mécanique violent.

3. Ressort selon la revendication 1, **caractérisé en ce que** les moyens de soupape normalement ouverts comportent des premiers moyens de soupape normalement ouverts (34) dans le passage (40, 42, 48, 52, 89, 88) et mobiles dans la position fermée en réponse à un choc mécanique violent dans une direction longitudinale et des seconds moyens de soupape normalement ouverts (84) dans le passage (40, 42, 48, 52, 89, 88) et mobiles dans la position fermée en réponse à un choc mécanique violent dans la direction longitudinale opposée.

4. Ressort selon la revendication 2, **caractérisé en ce que** les moyens de soupape normalement ouverts comportent un premier élément de soupape normalement ouvert (34) dans le passage (40, 42, 48, 52, 89, 88) qui est mobile dans la position fermée en réponse à une augmentation de pression dans les premiers moyens de chambre (30) qui résulte d'un choc mécanique violent dans une direction longitudinale et un deuxième élément de soupape normalement ouvert (84) dans le passage (40, 42, 48, 52, 89, 88) qui est mobile dans la position fermée en réponse à une augmentation de pression dans les deuxièmes moyens de chambre (31) qui résulte d'un choc mécanique violent dans la direction longitudinale opposée.

5. Ressort selon la revendication 4, **caractérisé en ce que** le premier élément de soupape normalement ouvert (34) est monté afin de pouvoir coulisser de manière étanche sur la tige de piston (18) et être ouvert à la pression dans les premiers moyens de chambre (30) et être rappelé le long de la tige de piston (18) en direction des premiers moyens de chambre (30) par les moyens de ressort (36).

6. Ressort selon la revendication 4 ou 5, **caractérisé en ce que** le deuxième élément de soupape normalement ouvert (84) comporte un élément de soupape en forme de disque (84) mobile axialement dans les moyens de piston (26) et ouvert à la pression dans les deuxièmes moyens de chambre (31), et rappelé vers les deuxièmes moyens de chambre par les moyens de ressort (86).

7. Ressort selon l'une quelconque des revendications précédentes, **caractérisé en ce que** les moyens de soupape pouvant être commandés (74) sont mobiles entre leurs deux positions grâce à une tige de commande (62) qui s'étend d'une manière longitudinalement coulissante à l'intérieur de la tige de piston (18) et à l'extérieur du corps creux (10).

8. Ressort selon la revendication 7, **caractérisé en ce que** les moyens de soupape pouvant être commandés comportent une extension de la tige de commande (62) à l'intérieur des moyens de piston (26) qui porte une partie de soupape (74) de diamètre agrandi qui est mobile dans le passage (40, 42, 48, 52, 89, 88) en réponse à un mouvement coulissant de la tige de commande (62), entre une position correspondant à la position fermée des moyens de soupape pouvant être commandés (74) dans laquelle elle engage des moyens d'étanchéité (58) dans une zone relativement étroite du passage (40, 42, 48, 52, 89, 88) et une position correspondant à la position ouverte des moyens de soupape pouvant être commandés (74) dans laquelle elle se trouve dans une zone agrandie du passage (40, 42, 48, 52, 89, 88).

9. Ressort selon la revendication 8, **caractérisé en ce que** le passage (40, 42, 48, 52, 89, 88) comprend un alésage (42) s'étendant longitudinalement par rapport et à l'intérieur des moyens de piston (26) mais excentré par rapport à l'axe longitudinal de ceux-ci et communiquant avec la zone relativement étroite.

10. Ressort selon l'une quelconque des revendications précédentes, **caractérisé en ce que** les moyens de compensation (96) comportent des moyens de piston coulissant de manière étanche secondaire (96) séparant une chambre (100) remplie avec du gaz sous pression de la pression du liquide à l'intérieur des deuxièmes moyens de chambre (31), de sorte que la position des moyens de piston secondaire (96) à l'intérieur du corps creux (10) varie de façon à accepter des changements dans le volume total des premiers et deuxièmes moyens de chambre (30, 31) qui résultent de la longueur variable de la tige de piston (18) dans les premiers moyens de chambre (30).

11. Ressort selon la revendication 10, **caractérisé en ce que** la pression à l'intérieur des deuxièmes moyens de chambre (31) est communiquée aux moyens de piston secondaire (96) par l'intermédiaire de moyens de soupape supplémentaires (108) qui sont normalement rappelés dans une position ouverte mais sont mobiles dans une position fermée afin de bloquer ladite communication en réponse à une augmentation de pression dans les deuxièmes moyens de chambre (31) qui résulte d'un choc mécanique violent.

12. Ressort selon la revendication 11, **caractérisé en ce que** les moyens de soupape supplémentaires (108) peuvent être disposés de manière commandée à l'intérieur d'une ouverture (102, 106) dans une paroi (90) s'étendant de manière fixe et étanche sur le corps creux (10).

13. Ressort selon l'une quelconque des revendications précédentes, **caractérisé en ce qu'**il est prévu pour commander un mouvement relatif de premier et deuxième éléments, dans lequel l'extrémité distale de la tige de piston (18) porte des moyens de fixation (116) destinés à fixer la tige de piston (18) sur le premier élément et l'extrémité opposée du corps creux (10) porte des moyens de fixation (14) destinés à fixer le corps creux (10) sur le deuxième élément.

14. Ressort selon la revendication 13, **caractérisé en ce que** le premier élément est une carrosserie de véhicule ou un élément fixé de manière rigide sur la carrosserie de véhicule et le deuxième élément est un élément monté de façon mobile par rapport au premier élément.

15. Ressort selon la revendication 14, **caractérisé en ce que** le deuxième élément est un dossier de siège incliné de manière articulée d'un siège de véhicule.
